# NEUE EUROPÄISCHE PATENTSCHRIFT

(11) **EP 3 677 610 B2**
(45) Veröffentlichungstag und Bekanntmachung des Hinweises auf die Entscheidung über den Einspruch: **24.12.2025**
(45) Hinweis auf die Patenterteilung: 22.09.2021
(21) Anmeldenummer: 19150465.3
(22) Anmeldetag: 07.01.2019
(51) Int. Cl.: C08G 18/76, C08K 5/01, C08G 18/16, C08G 18/18, C08G 18/22, C08G 18/42, C08K 5/5419, C08J 9/00, C08L 75/06, C08J 9/14, C08G 101/00

(54) **HERSTELLUNG VON POLYURETHANHARTSCHAUM**
PREPARATION OF POLYURETHANE FOAM
FABRICATION DE MOUSSE DURE DE POLYURÉTHANE

(43) Veröffentlichungstag der Anmeldung: 08.07.2020
(73) Patentinhaber: Evonik Operations GmbH, 45128 Essen (DE)
(72) Erfinder: GLOS, Martin, 46325 Borken (DE); GRIMMINGER, Jobst, 25479 Ellerau (DE); FERENZ, Michael, 45147 Essen (DE)
(74) Vertreter: Evonik Patent Association

(56) Entgegenhaltungen:
- EP-A1- 2 465 892
- WO-A1-2015/101497
- WO-A1-2017/220332
- KR-A- 20130 007 896
- US-A- 4 751 251
- US-A- 5 310 766
- US-A- 5 852 065

## Beschreibung

Die vorliegende Erfindung liegt auf dem Gebiet der Polyurethanhartschäume. Insbesondere betrifft sie die Herstellung von Polyurethanhartschäumen unter Verwendung spezieller Siloxan-Verbindungen in Kombination mit Kohlenwasserstoffen, sowie weiterhin die Verwendung der Schäume, die damit hergestellt wurden.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung insbesondere Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine.

Bei der Herstellung von Polyurethan- und Polyisocyanurat-Hartschaumstoffen werden gewöhnlich zellstabilisierende Additive eingesetzt, welche für eine feinzellige, gleichmäßige und störungsarme Schaumstruktur sorgen sollen und damit die Gebrauchseigenschaften, besonders das thermische Isolationsvermögen des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Kohlenwasserstoffe werden hierbei oftmals als Treibmittel verwendet. Hierbei werden bevorzugt Verbindungen mit 3 bis 7 Kohlenstoffen eingesetzt, da diese ihre Siedpunkte im passenden Temperaturbereich haben, so dass sie beim Verschäumungsprozess verdampfen und damit zur Volumenzunahme, also zur Schaumbildung, beitragen. Im fertigen Schaum sind diese Treibmittel dann noch als Zellgas im Schaum enthalten.

Verschiedene Veröffentlichungen bezüglich der Verwendung von Siloxan basierenden Additiven wurden bereits publiziert. Meist kommen hierbei Polyethersiloxan-Schaumstabilisatoren (PES) für Hartschaum-Anwendungen zum Einsatz.

Die EP 0 570 174 B1 beschreibt Polyethersiloxane, die sich für die Herstellung von PolyurethanHartschäumen unter Verwendung von organischen Treibmitteln, insbesondere Fluorchlorkohlenwasserstoffen wie CFC-11 eignen.

In der EP 0 533 202 A1 werden Polyethersiloxane beschrieben, die SiC-gebundene Polyalkylenoxiden-Reste tragen und bei der Verwendung von Hydrochlorfluorkohlenwasserstoffe, wie z. B. HCFC-123, als Treibmittel, geeignet sind.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

EP1544235 beschreibt typische Polyether-modifizierte Siloxane für PU-Hartschaumanwendungen. Hier werden Siloxane mit 60 bis 130 Si-Atomen und unterschiedlichen Polyethersubstituenten R, deren Mischungsmolgewicht 450 bis 1000 g/mol beträgt und deren Ethylenoxidanteil bei 70 bis 100 mol % liegt, verwendet.

In CN103055759, werden Polyether-modifizierte Siloxane beschrieben die eine verbesserte Zellöffnung bewirken. Es sind mindestens 18 Si-Einheiten im Siloxan enthalten und es werden verschiedenartige Seitenketten zur Modifizierung verwendet.

EP 1873209 beschreibt Polyether-modifizierte Siloxane zur Herstellung von PU-Hartschäumen mit verbesserten Brandeigenschaften. Hier sind 10 bis 45 Si-Atome in den Siloxanen enthalten und die Polyether-Seitenketten bestehen zu mind. 90% aus Ethylenoxid-Einheiten.

EP 2465891 A1 beschreibt Polyether-modifizierte Siloxane bei denen die Polyetherseitenketten teilweise OH-Gruppen tragen. Hierbei enthalten die Siloxane mindestens 10 Si Atome.

EP 2465892 A1 beschreibt Polyether-modifizierte Siloxane bei denen die Polyetherseitenketten hauptsächlich sekundäre OH-Endgruppen tragen. Auch hier enthalten die Siloxane mind. 10 Si Atome.

In DE 3234462 werden Siloxane zur Verwendung in Weichschaum, speziell Weichformschaum, beschrieben. Hier werden Kombinationen aus Polyether-modifizierten Siloxanen (PES) und Polydimethylsiloxanen beschrieben, wobei die PES von 4-15 Si-Einheiten enthalten. Es wird hier keine Verwendung im Hartschaum beschrieben.

Die Verwendung von Kohlenwasserstoffen mit maximal 7 Kohlenstoffen ist in zahlreichen Schriften beschrieben.

US 20110218259 beschreibt die Verwendung von Cyclopentan in PU-Hartschaumsystemen mit verbesserter Fließfähigkeit, wie sie z.B. bei der Herstellung von Kühlmöbeln oder Paneelen benötigt werden.

EP 421269 beschreibt die Verwendung von Cyclopentan und Mischungen davon mit Cyclohexan und diversen Kohlenwasserstoffen mit max. 4 Kohlenstoffen, sowie Ether und Fluoralkane, die einen Siedepunkt von kleiner 35°C haben. Hier werden also Kohlenwasserstoffe verwendet, die alle bei der PU-Verschäumung verdampfen und somit als Treibmittel dienen.

In WO 2016202912 werden verschiedene Kohlenwasserstoffe sowie Ether, Ketone, Ester, Acetale und Fluoralkane als Treibmittel beschrieben. Vorzugweise liegen die Siedepunkte unter 50°C.

In CN 101880452 wird die Verwendung von Alkanen mit 14 bis 21 Kohlenstoffen beschrieben als Phasenübergangsmaterial, das als Füllstoff in Mengen von 10 bis 30 Teilen auf 100 Teile Polyol zum Einsatz kommt. Hierbei werden keine Effekte auf die Qualität eines damit hergestellten PU-Schaums hinsichtlich dessen Wärmeleitfähigkeit beschrieben.

JP 09165427 beschreibt die Verwendung von Alkanen mit 9 bis 12 Kohlenstoffen, die dazu dienen die Lagerstabilität der Polyol-Mischung zu verbessern, speziell für den Fall, wenn Pentan als Treibmittel verwendet wird. Es kommen 1 bis 10 Teile der Alkane bezogen auf 100 Teile Polyol zum Einsatz. Hierbei werden keine Effekte auf die Qualität eines damit hergestellten PU-Schaums hinsichtlich dessen Wärmeleitfähigkeit beschrieben.

US 20070066697 beschreibt PU Weichschäume, die durch Verwendung von Kohlenwasserstoffen mit 10 bis 70 Kohlenstoffen eine bessere Stauchhärte erhalten. Die Dosierung von 0,01 bis 100 pphp, 1 bis 25, 2 bis 8 pphp. Hier wird kein Hartschaum beschrieben.

JPH0418431A beschreibt die Verwendung von nicht-reaktiven Komponenten wie z.B. Paraffine oder andere Kohlenwasserstoffe, die in Mengen von 0,1 bis 10 pphp zugegeben werden, in PU-Hartschaum, wodurch die Alterung des Schaums hinsichtlich des Lambda-Wertes verbessert werden soll. Hierbei zeigen die Beispiele, dass die intialen Lambda-Werte bei Zugabe von Paraffin schlechter werden.

Siloxane, die keine Polyether-modifizierung enthalten sind hauptsächlich in Polyurethan-Weichschaum, speziell Formschaum, bekannt als Additive.

Beispiele hierfür sind die DE 2533074 A1, sie beschreibt Polydimethylsiloxan für Weichschaum, mit Kettenlängen bis N = 12, EP1095968A1, sie beschreibt Polydimethylsiloxane für Weichschaum mit bevorzugt 7-9 Si-Atomen, DE4444898 C1, sie beschreibt die Herstellung von Kaltschäume mit Alkylaryl-modifizierten Siloxanen, die 5-16 Si-Atome enthalten. DE 3215317 C1 beschreibt die Herstellung von Kaltschäumen mit Siloxanen, die mit Allylglycidether modifiziert und anschließend mit Aminen umgesetzt werden. Auch hier sind maximal 10 Si-Atome in Siloxane enthalten. EP0258600A2 beschreibt Kaltschäume mit Chlorpropyl-modifizierten Siloxanen mit 3-20 Si-Einheiten und 1-8 Seitenkettenmodifizierungen.

Keine dieser Schriften beschreibt allerdings die Verwendung in PU-Hartschaum.

EP2368927A1 beschreibt die Herstellung von PU-Hartschaum unter Verwendung von CO₂ als Treibmittel und zwei verschiedenen Polyol-Typen, eines auf Basis von Phenol-Harzen, hergestellt aus Novolaken und Alkylenoxiden, und eines auf Basis von aromatischen Amin-Polyolen, hergestellt durch Alkoxylierung von aromatischen Aminen. Hierbei können neben üblichen PES auch Polydimethylsiloxane, wie insbesondere Hexamethyldisiloxan zum Einsatz.

WO 2015/101497A1 offenbart eine Zusammensetzung, die zur Herstellung von Polyurethan- oder Polyisocyanurat- Hartschaumstoffen geeignet ist, enthaltend zumindest eine Isocyanatkomponente, zumindest eine Isocyanat-reaktive Komponente, zumindest einen Schaumstabilisator, zumindest einen Urethan- und/oder Isocyanurat-Katalysator, wobei die Zusammensetzung als Schaumstabilisatoren mindestens zwei verschiedene Sorten von Polyethersiloxanen aufweist.

WO 2017/220332 A1 offenbart ein Verfahren zur Herstellung von Polyurethanschaum durch Umsetzung mindestens einer Polyolkomponente mit mindestens einer Isocyanatkomponente in Gegenwart mindestens eines Treibmittels und eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart ausgesuchter Polyether-Siloxan-Copolymere durchgeführt wird. In den Beispielen wird dort jeweils ein Polyether-modifiziertes Polysiloxan in Kombination mit Kohlenwasserstoffen wie n-Pentan, iso-Pentan als Treibmittel eingesetzt.

US 5,852,065 offenbart ein Verfahren zur Herstellung eines flexiblen geformten oder starren Polyurethanschaums durch Umsetzen eines organischen Polyisocyanats mit einem Polyol in Gegenwart eines Urethankatalysators, Wasser als Treibmittel, gegebenenfalls eines Silikontensid-Zellstabilisators und eines Polyethersiloxan-basierten Zellöffners, wobei der Zellöffner das Reaktionsprodukt von 1,1,1,3,5,5,5-Hepta(hydrocarbyl)trisiloxan gekoppelt mit Polyalkylenoxidmonoallylether und verkappt mit einem C₁-C₂₀-Hydrocarbylgruppen enthaltenden Bernsteinsäureanhydrid umfasst.
US 4,751,251 offenbart eine Zusammensetzung zur Herstellung von Polyurethanschaumstoffen enthaltend ein Polyether-modifiziertes Polysiloxan, sowie ein weiteres Additiv, welches nicht auf Polysiloxanen basiert, z.B. ethoxylierte Fettsäurealkohole, Sulfonate oder Amide.

Aufgabe der vorliegenden Erfindung war die Bereitstellung von Polyurethan- bzw. Polyisocyanurat-Hartschaumstoffen, die besonders vorteilhafte Gebrauchseigenschaften, wie insbesondere niedrige Wärmeleitfähigkeit und/oder gute Oberflächenqualität aufweisen.

Überraschenderweise wurde nun gefunden, dass der kombinierte Einsatz von bestimmten Kohlenwasserstoffen KWS und Polyether-modifizierten-Siloxanen (PES), wie in Anspruch 1 angegeben, die Lösung dieser Aufgabe ermöglicht, und zur Herstellung von Hartschäumen mit verbesserten Gebrauchseigenschaften (wie insbesondere Lambda-Werten) führt. Es werden insbesondere niedrige Wärmeleitfähigkeit und/oder gute Oberflächenqualität ermöglicht. Es wird eine gute Feinzelligkeit ermöglicht. Schaumdefekte können verringert werden. Gegenstand der Erfindung ist eine Zusammensetzung zur Herstellung von Polyurethanhartschaum gemäß Anspruch 1.
Mit der vorliegenden Erfindung können somit PU-Hartschaum basierte Produkte wie z.B. Isolationspaneele oder Kühlmöbel mit höherer Qualität hergestellt bzw. die Prozesse zur Herstellung effizienter gestaltet werden. Bereits eine sehr geringe Zugabe an erfindungsgemäßen Kohlenwasserstoffen KWS ermöglicht im Zusammenspiel mit Polyether-modifizierten-Siloxanen entsprechende Verbesserungen.

In einer besonders bevorzugten Ausführungsform der Erfindung werden zusätzlich noch Polyalkyl-Siloxane (PAS) verwendet, wobei dann also Mischungen bzw. Kombinationen aus Kohlenwasserstoffen (KWS), Polyalkyl-Siloxane (PAS) und Polyether-modifizierten-Siloxanen (PES) eingesetzt werden.

Die erfindungsgemäßen Kohlenwasserstoffe KWS haben Siedepunkte von über 100°C, bevorzugt über 150°C. Es können sowohl gesättigte oder auch ungesättigte sowie auch aromatische Kohlenwasserstoffe zum Einsatz kommen. Die Kohlenwasserstoffe KWS können verzweigt oder unverzweigt sein.

Einsetzbare Materialien sind beispielsweise erhältlich von der Fa. Sasol unter den Handelsnamen: HF-1000, LINPAR, SASOLAB, PARAFOL erhältlich.

Einsetzbare Kohlenwasserstoffe KWS können beispielsweise hergestellt werden durch Oligomerisierung von Olefinen wie in DE102008007081A1 und DE102013212481A1 beschrieben.

Ebenso können auch entsprechende Stoffströme, die bei der Herstellung von Oxoalkoholen anfallen verwendet werden, wie sie in EP1515934B1 und EP2947064A1 beschrieben sind.

Erfindungsgemäße Kohlenwasserstoffe KWS sind Decen, Dodecen, Dodekan, Tetradecan, Tributen, Tributan, Tetrabuten, Tetrabutan, Alkylbenzole mit mindestens 10 Kohlenstoffatomen und/oder Oxoöle.

Die Polyether-modifizierten Siloxane (PES) werden weiter unten genauer beschrieben. Als Polyether-modifizierten-Siloxane können die bekannen Strukturen nach dem Stand der Technik verwendet werden, die zur Herstellung von PU-Hartschäumen geeignet sind. Diese sind dem Fachmann bekannt.

Die bevorzugt einsetzbaren Polyalkyl-Siloxane (PAS) werden nachfolgend genauer beschrieben. Der Einsatz von Polyalkyl-Siloxanen (PAS) ist im Rahmen der Erfindung optional, vorzugsweise ist der Einsatz der Polyalkyl-Siloxane (PAS) obligat, d.h. vorzugsweise werden Polyalkyl-Siloxane (PAS) eingesetzt.

Gemäß einer bevorzugten Ausführungsform der Erfindung enthalten die optional einsetzbaren Polyalkyl-Siloxane weniger als 20, bevorzugt weniger als 15 besonders bevorzugt weniger als 11 Si-Atome.

Gemäß einer bevorzugten Ausführungsform der Erfindung werden die optional einsetzbaren Polyalkyl-Siloxane in Kombination mit Polyether-modifizierten Siloxanen in Massenverhältnis von 1:5 zu 1:200 eingesetzt.

Gemäß einer bevorzugten Ausführungsform der Erfindung können die Kohlenwasserstoffe KWS, Polyether-modifizierten Siloxane und optionalen Polyalkyl-Siloxane getrennt oder als Mischung der zu verschäumenden Masse zugegeben werden.

Wenn die optionalen Polyalkyl-Siloxane getrennt zugegeben werden, erfolgt die Zugabe vorzugsweise in einem Trägermedium (Lösemittel) Als Trägermedien kommen beispielweise Glykole, Alkoxylate oder Öle synthetischer und/oder natürlicher Herkunft in Frage.

Gemäß einer bevorzugten Ausführungsform der Erfindung unterliegen die optionalen Polyalkyl-Siloxane der Formel (1):

Ma D_{b} T_{c} Q_{d} (Formel 1)

M = R¹¹R¹²R¹³SiO_{1/2}
D = R¹⁴R¹⁵SiO_{2/2}
T = R¹⁶SiO_{3/2}
Q = SiO_{4/2}
R¹¹, R¹², R¹³, R¹⁴, R¹⁵, R¹⁶ = gleiche oder verschiedene Kohlenwasserstoffreste mit 1 bis 12 Kohlenstoffatomen, wobei die Kohlenwasserstoffreste ggf. mit Heteroatomen substituiert sind, oder H,
bevorzugt gleiche oder verschiedene Kohlenwasserstoffreste mit 1 - 8 Kohlenstoffatomen, wobei die Kohlenwasserstoffreste ggf. mit Heteroatomen substituiert sind, oder H, insbesondere bevorzugt sind die Reste: Phenyl-, CH₃-, CH₃CH₂-, CH₂CH- ClCH₂CH₂CH₂- und H-.
a=2-6
b=0-8
c=0-4
d=0-2
mit der Maßgabe, das a + b + c + d < 20, bevorzugt < 15 insbesondere bevorzugt < 11 ist.

Bevorzugt ist c + d > 0,5, insbesondere bevorzugt ist c + d >= 1.

In einer weiteren besonders bevorzugten Ausführung ist d=0 und c > 0,5, insbesondere d = 0 und c größer oder gleich 1.

In einer weiteren bevorzugten Ausführung ist c + d < 0,5, insbesondere bevorzugt ist c + d <0,1

In einer weiteren bevorzugten Ausführung ist R¹⁶ unterschiedlich zu R¹¹, R¹², R¹³, R¹⁴ und R¹⁵.

In einer weiteren bevorzugten Ausführung sind R¹¹, R¹², R¹³ unterschiedlich, so dass die M-Einheit im Siloxan zwei oder drei unterschiedliche Reste tragen.

Bevorzugte Polyalkyl-Siloxane genügen der Formel 2: 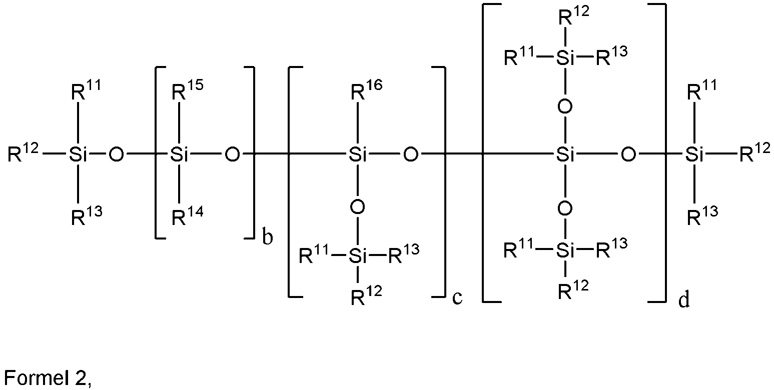 darin R¹¹ bis R¹⁶ sowie b, c, d wie oben angegeben.

Bevorzugte Polyalkyl-Siloxane der Formel 2 genügen den Formeln 3 oder 4: 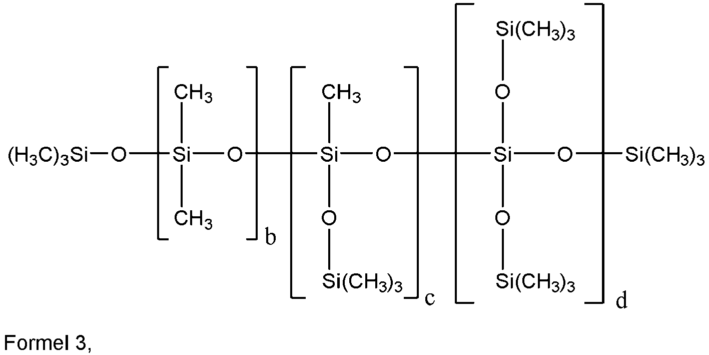 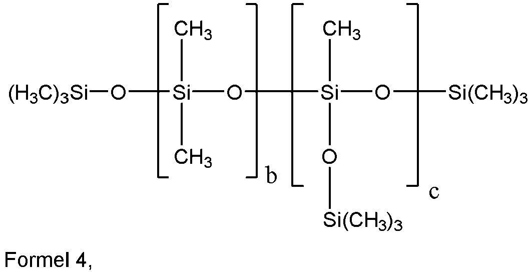 darin b, c, d wie oben angegeben.

Bevorzugte Polyalkyl-Siloxane sind die folgenden: 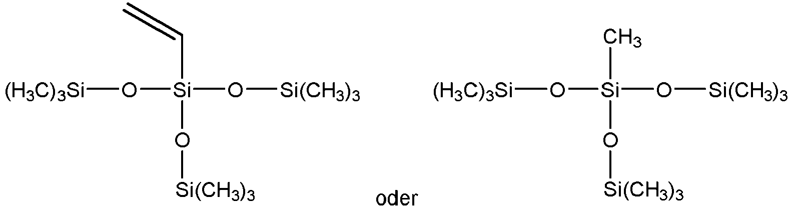 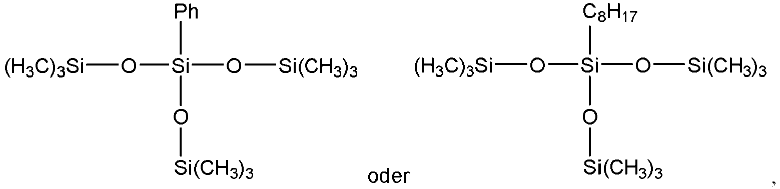 oder oder 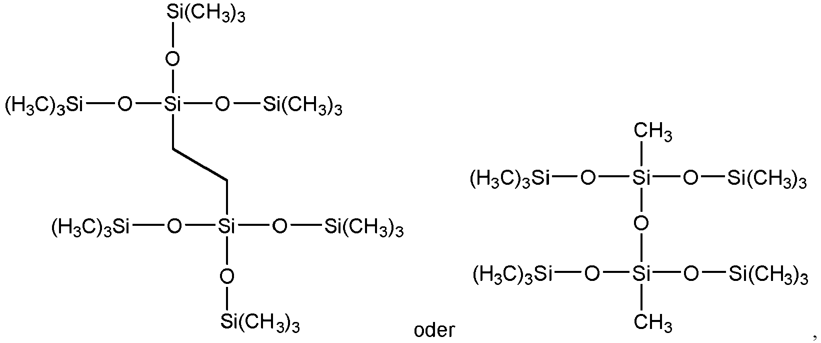 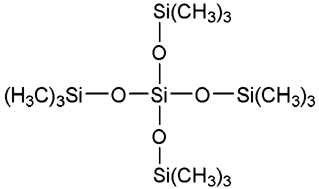 oder 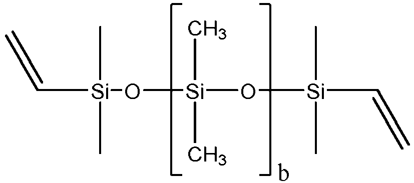 oder 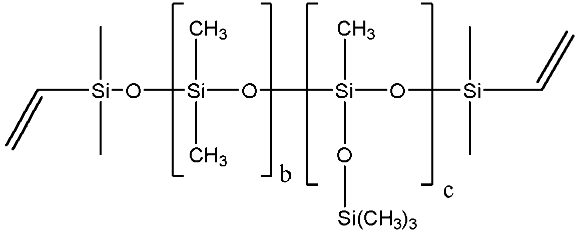 oder 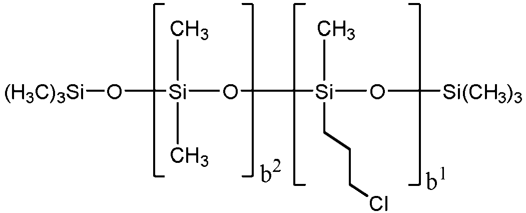
mit b¹ + b² = b, wobei b, c wie oben angegeben,
   oder, 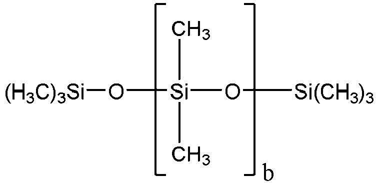
wobei b oben angegeben, oder 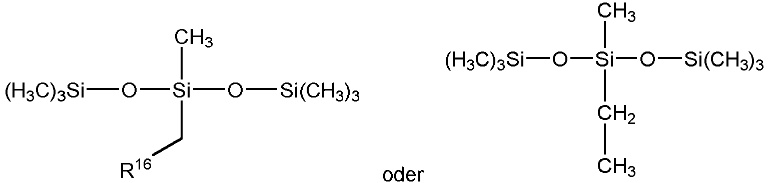 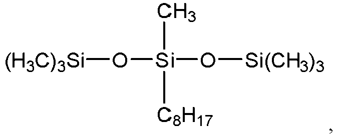 oder 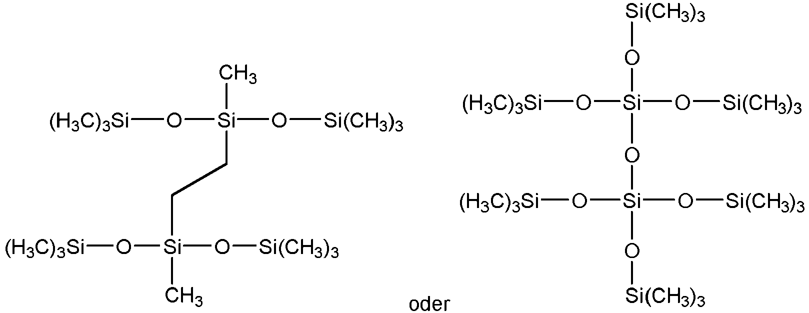 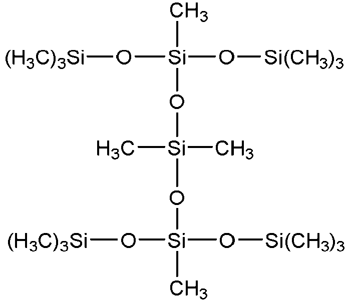 oder 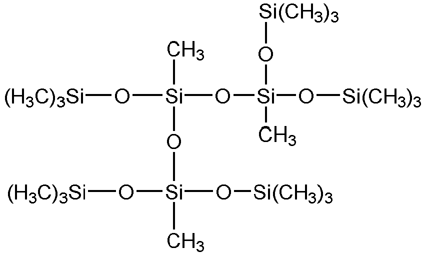 oder 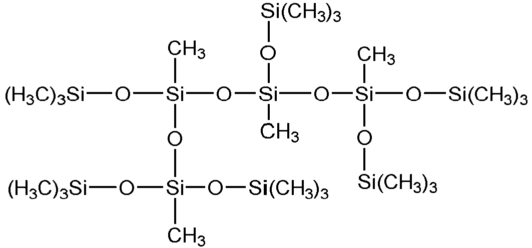 oder

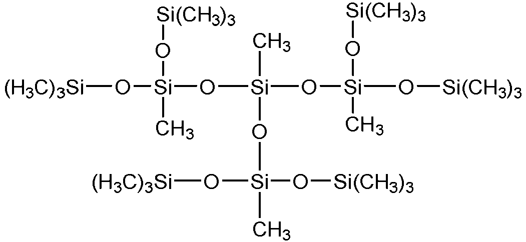

Im Folgenden werden die Polyether-modifizierten Siloxane genauer beschrieben. Der Einsatz Polyether-modifizierter Siloxane ist im Rahmen der Erfindung obligat.

Grundsätzlich können alle aus dem Stand der Technik bekannten Polyether-modifizierten Siloxane verwendet werden.

Bevorzugte Polyether-modifizierte Siloxane lassen sich mit der folgenden Formel beschreiben: 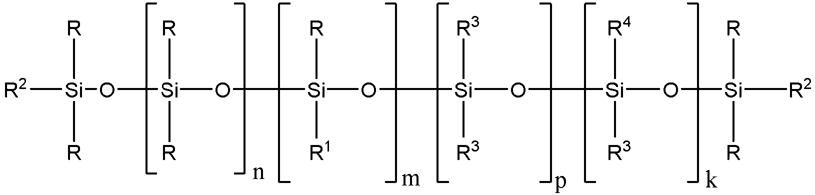 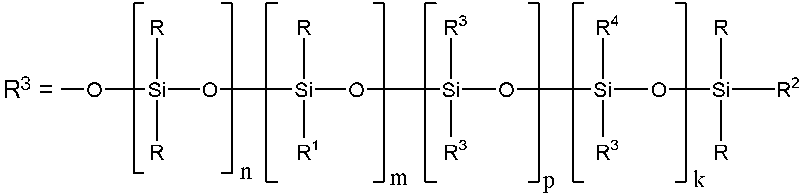 mit
- n: unabhängig voneinander 0 bis 500 ist, vorzugsweise 1 bis 300 und insbesondere 2 bis 150,
- m: unabhängig voneinander 0 bis 60 ist, vorzugsweise 1 bis 50 und insbesondere 1 bis 30,
- p: unabhängig voneinander 0 bis 10, vorzugsweise 0 oder > 0 bis 5, ist,
- k: unabhängig voneinander 0 bis 10, vorzugsweise 0 oder > 0 bis 5, ist,
mit der Maßgabe, dass pro Molekül der Formel (1) die mittlere Anzahl Σk der T-Einheiten und die mittlere Anzahl Σp der Q-Einheiten pro Molekül jeweils nicht größer als 50, die mittlere Anzahl Σn der D-Einheiten pro Molekül nicht größer als 2000 und die mittlere Anzahl Σm der R¹ tragenden Siloxy-Einheiten pro Molekül nicht größer als 100 ist,
- R: unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- R²: unabhängig voneinander R¹ oder R ist,
- R¹: ist ungleich R und unabhängig voneinander ein organischer Rest und/oder ein Polyetherrest,
bevorzugt ist R¹ ausgewählt aus der Gruppe:

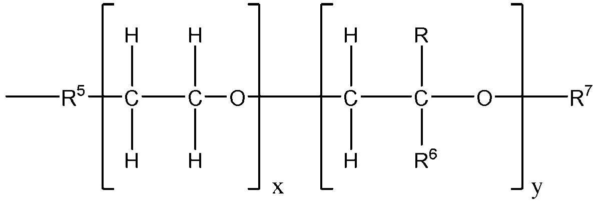

-CH₂-CH₂-CH₂-O-(CH₂-CH₂O-)ₓ-(CH₂-CH(R⁶)O-)_{y}-R⁷

-CH₂-CH₂-O-(CH₂-CH₂O-)ₓ-(CH₂-CH(R⁶)O-)_{y}-R⁷

-O-(C₂H₄O-)ₓ-(C₃H₅O-)_{y}-R⁶

-CH₂-R⁸

-CH₂-CH₂-(O)_{x'}-R⁸

-CH₂-CH₂-CH₂-O-CH₂-CH(OH)-CH₂OH

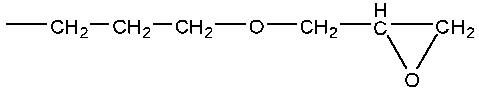

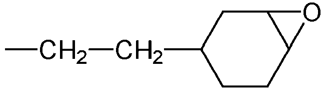

oder

-CH₂-CH₂-CH₂-O-CH₂-C(CH₂OH)₂-CH₂-CH₃ ist,

worin
- x: 0 bis 100, vorzugsweise > 0, insbesondere 1 bis 50,
- x': 0 oder 1,
- y: 0 bis 100, vorzugsweise > 0, insbesondere 1 bis 50,
- R⁶: unabhängig voneinander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes R¹ und/oder eines Moleküls der Formel (1) untereinander verschiedene Substituenten R¹ vorliegen können, und
- R⁷: unabhängig voneinander ein Wasserstoffrest oder eine Alkylgruppe mit 1 bis 4 C-Atomen, eine Gruppe -C(O)-R⁸ mit R⁸ = Alkylrest, eine Gruppe -CH₂-O-R⁶, eine Alkylarylgruppe, wie z. B. eine Benzylgruppe, oder eine Gruppe -C(O)NH-R⁶ bedeutet,
- R⁸: ein linearer, cyclischer oder verzweigter, ggf. substituierter, z. B. mit Halogenen substituierter, Kohlenwasserstoffrest mit 1 bis 50, vorzugsweise 9 bis 45, bevorzugt 13 bis 37 C-Atomen ist,
- R⁵: - D-G_{z}-wobei D ein linearer, cyclischer oder verzweigter, ggf. substituierter, z. B. mit Heteroatomen wie O,N oder Halogenen substituierter, gesättigter oder ungesättigter Kohlenwasserstoffrest mit 2 bis 50, vorzugsweise 3 bis 45, bevorzugt 4 bis 37 C-Atomen ist,
G einer der folgenden Formeln entspricht 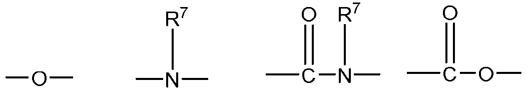
- z: gleich 0 oder 1 sein kann,
- wobei R¹: auch verbrückend sein kann sein kann in dem Sinn, dass zwei oder drei Siloxan-Strukturen der Formel (1) über R¹ miteinander verbunden sein können, in diesem Fall sind R⁷ oder R⁸ entsprechend bifunktionelle Gruppen also gleich R⁵,
- R⁴: unabhängig voneinander R, R¹ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,
mit der Maßgabe, dass mindestens ein Substituent aus R¹, R² und R⁴ nicht gleich R ist.

R³ stellt die Siloxan-Seitenketten dar, die durch T- und Q-Einheiten entstehen können. Da man nicht exakt steuern kann, wo diese Verzweigungen sitzen, tritt in der Formel (1) für R³ wiederum R³ auf. Es kann also zu hyperverzweigten Strukturen kommen wie es beispielsweise bei Dendrimeren auftritt.

Besonders bevorzugte Polyether-modifizierte Siloxane genügen der Formel 5 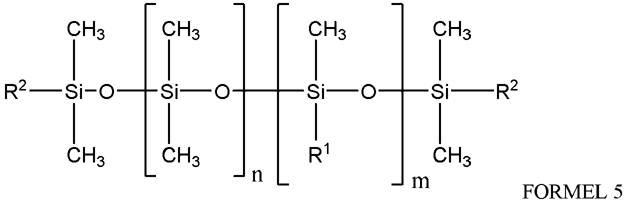 mit
R¹ gleich oder verschieden = 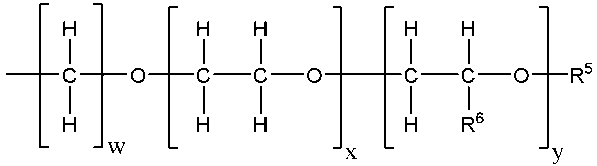
oder ein C₈ bis C₂₂-Alkyl-Rest,
R² gleich oder verschieden = - CH₃ oder R¹,
n+m+2 = 10 bis 150, vorzugsweise 25 bis 120,
m = 0 bis 25, vorzugsweise 0,5 bis 15,
w = 2 bis 10, vorzugsweise 3,
x+ y = 1 bis 30,vorzugsweise 5 bis 25,
R⁶ = gleich oder verschieden -CH₃, -CH₂CH₃ oder Phenyl-Reste,
R⁵ = gleich oder verschieden H, Alkyl- oder Acyl-Reste, vorzugsweise -H, -CH₃ oder -COCH₃.
wobei mindestens ein Rest mit x+y größer als 3 enthalten sein muss. In einer bevorzugten Ausführungsform ist mindestens ein Rest R² gleich R¹ .

In einer weiteren bevorzugten Ausführungsform der Erfindung werden Polyether-modifizierte Siloxane der Formel 5 verwendet, wobei der molare Anteil an Oxyethylen-Einheiten mind. 70% der Oxalkylen-Einheiten ausmacht, also x/(x+y) >0,7 ist. Außerdem kann es vorteilhaft sein wenn die Polyoxyalkylen-Kette am Ende einen Wasserstoff oder eine Methyl-Gruppe trägt und gleichzeitig der molare Anteil an Oxyethylen-Einheiten maximal 70% der Oxalkylen-Einheiten ausmacht, also x/(x+y) <0,7 ist und R⁵ ein Wasserstoff-oder Methyl-Rest bedeutet.

In einer weiteren bevorzugten Ausführungsform der Erfindung werden Polyethersiloxane der Formel (5) verwendet in denen bei der Hydrosilylierung unter anderem Olefine eingesetzt werden, wodurch R¹ mindestens zu 10 mol%, bevorzugt zu mindestens 20 mol%, besonders bevorzugt zu mindestens 40 mol% aus CH₂-R⁸ besteht, wobei R⁸ ein linearer oder verzweigter Kohlen-wasserstoff mit 9 bis 17 Kohlenstoffatomen ist.

In einer weiteren bevorzugten Ausführungsform der Erfindung werden Polyethersiloxane der Formel (5) verwendet in denen die endständigen, oder auch alpha- und omega- genannten, Positionen am Siloxan mindestens teilweise mit Resten R¹ funktionalisiert sind. Es sind hierbei zumindest 10 mol-%, bevorzugt zumindest 30 mol-%, besonders bevorzugt zumindest 50 mol-% der endständigen Positionen mit Resten R¹ funktionalisiert.

In einer besonders bevorzugten Ausführungsform der Erfindung werden Polyethersiloxane der Formel (5) verwendet in denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt.

In einer weiteren bevorzugten Ausführungsform der Erfindung werden Polyethersiloxane der Formel (5) verwendet wobei die Anzahl der Strukturelemente mit dem Index n in größerer Anzahl vorliegen als die Strukturelemente mit dem Index m, in der Art, dass der Quotient n/m mindestens gleich 4 , vorzugsweise größer 6, besonders bevorzugt größer 7 ist.

Die erfindungsgemäß einsetzbaren Kohlenwasserstoffe KWS, Polyether-modifizierten Siloxane und optionalen Polyalkyl-Siloxane können auch als Teil von Zusammensetzungen mit verschiedenen Trägermedien eingesetzt werden.

Als Trägermedien kommen beispielweise Glykole, Alkoxylate oder Öle synthetischer und/oder natürlicher Herkunft in Frage. Es entspricht einer bevorzugten Ausführungsform der Erfindung, wenn der gesamte Massenanteil an Kohlenwasserstoffe KWS, Polyether-modifizierten Siloxane und optionalen Polyalkyl-Siloxane am fertigen Polyurethanschaum von 0,01 bis 10 Gew.-%, bevorzugt von 0,1 bis 3 Gew.-% beträgt.

In einer besonders bevorzugten Ausführungsform der Erfindung ist der Einsatz von PAS obligatorisch, dabei werden vorzugsweise die folgenden Kombinationen von PAS und PES eingesetzt:
a) PAS der Formel 3 mit c + d > 0,5 in Kombination mit PES der Formel 5, bei denen der Quotient n/m mindestens gleich 4 , vorzugsweise größer 6, besonders bevorzugt größer 7 ist.
b) PAS der Formel 3 mit c + d > 0,5 in Kombination mit PES der Formel 5, bei denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt.
c) PAS der Formel 3 mit c + d > 0,5 in Kombination mit PES der Formel 5, bei dene die Polyoxyalkylen-Kette am Ende einen Wasserstoff oder eine Methyl-Gruppe trägt und gleichzeitig der molare Anteil an Oxyethylen-Einheiten maximal 70% der Oxalkylen-Einheiten ausmacht, also x/(x+y) <0,7 ist und R⁵ ein Wasserstoff-oder Methyl-Rest bedeutet.
d) PAS der Formel 3 mit c + d < 0,5, insbesondere bevorzugt c + d <0,1 in Kombination mit PES der Formel 5, bei denen der Quotient n/m mindestens gleich 4 , vorzugsweise größer 6, besonders bevorzugt größer 7 ist.
e) PAS der Formel 3 mit c + d < 0,5, insbesondere bevorzugt c + d <0,1 in Kombination mit PES der Formel 5, bei denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt,
   oder
f) PAS der Formel 3 mit c + d < 0,5, insbesondere bevorzugt c + d <0,1 in Kombination mit PES der Formel 5, bei dene die Polyoxyalkylen-Kette am Ende einen Wasserstoff oder eine Methyl-Gruppe trägt und gleichzeitig der molare Anteil an Oxyethylen-Einheiten maximal 70% der Oxalkylen-Einheiten ausmacht, also x/(x+y) <0,7 ist und R⁵ ein Wasserstoff-oder Methyl-Rest bedeutet.

Die erfindungsgemäßen Kombinationen aus Kohlenwasserstoffe KWS, Polyether-modifizierten Siloxane und optionalen Polyalkyl-Siloxane werden im folgenden auch als "Mischung" bezeichnet, unabhängig davon ob die Komponenten getrennt oder gemeinsam dem Reaktionsgemisch zur Herstellung des PU-Hartschaums zugeführt werden.

Ein weiterer Gegenstand der vorliegenden Erfindung ist eine Zusammensetzung, geeignet zur Herstellung von Polyurethan- oder Polyisocyanurat-Hartschaumstoffen, enthaltend zumindest eine Isocyanatkomponente, zumindest eine Polyolkomponente, zumindest einen Schaumstabilisator, zumindest einen Urethan- und/oder Isocyanurat-Katalysatoren, Wasser und/oder Treibmittel, und optional zumindest ein Flammschutzmittel und/oder weitere Additive, welche dadurch gekennzeichnet ist, dass als Schaumstabilisator eine erfindungsgemäße Mischung von Kohlenwasserstoffe KWS, Polyether-modifizierten Siloxane und optionalen Polyalkyl-Siloxane enthalten ist, ein Verfahren zur Herstellung von Polyurethan- oder Polyisocyanurat-Hartschaumstoffen, durch Umsetzung dieser Zusammensetzung sowie die dadurch erhältlichen Polyurethan- oder Polyisocyanurat-Hartschaumstoffe.

Außerdem ist Gegenstand der vorliegenden Erfindung die Verwendung von erfindungsgemäßen Polyurethan- oder Polyisocyanurat-Hartschaumstoffen als Dämmplatten und Isolationsmittel sowie eine Kühlapparatur, die als Isoliermaterial einen erfindungsgemäßen Polyurethan- oder Polyisocyanurat-Hartschaumstoff aufweist.

Die erfindungsgemäße Mischung von Kohlenwasserstoffe KWS, Polyether-modifizierten Siloxane und optionalen Polyalkyl-Siloxane hat den Vorteil, dass mit Ihnen Polyurethan- oder Polyisocyanuratschäume, insbesondere Hartschäume hergestellt werden können, die sich durch eine gute Feinzelligkeit und gute Isoliereigenschaften auszeichnen und gleichzeitig wenig Schaumdefekte aufweisen.

Bevorzugte erfindungsgemäße Zusammensetzungen, die zur Herstellung von Polyurethan- oder Polyisocyanurat-Hartschaumstoffen geeignet sind, enthalten zumindest eine Isocyanatkomponente, zumindest eine Polyolkomponente, zumindest einen Schaumstabilisator, zumindest einen Urethan- und/oder Isocyanurat-Katalysatoren, Wasser und/oder Treibmittel, und optional zumindest ein Flammschutzmittel und/oder weitere Additive, und zeichnen sich dadurch aus, dass zumindest eine erfindungsgemäße Mischung von Kohlenwasserstoffe KWS, Polyether-modifizierten Siloxane und optionalen Polyalkyl-Siloxane enthalten ist.

Eine bevorzugte erfindungsgemäße Zusammensetzung enthält die folgenden Bestandteile
a) Mindestens eine isocyanat-reaktive Komponente, insbesondere Polyole
b) mindestens ein Polyisocyanat und/oder Polyisocyanat-Präpolymer
c) (optional) einen Katalysator, der die Reaktion von Polyolen a) und b) mit den Isocyanaten c) beschleunigt, bzw. steuert
d) eine erfindungsgemäße Mischung aus Kohlenwasserstoffe KWS, Polyether-modifizierten Siloxane und optionalen Polyalkyl-Siloxane
e) ein oder mehrere Treibmittel
f) weiter Additive, Füllstoffe, Flammschautzmittel, etc.

In der erfindungsgemäßen Zusammensetzung beträgt der Massenanteil an erfindungsgemäßer Mischung (also Kohlenwasserstoffe KWS, Polyether-modifizierten Siloxane und optionalen Polyalkyl-Siloxane) d) bezogen auf 100 Massenteile Polyolkomponente a) vorzugsweise von 0,1 bis 10 pphp, bevorzugt von 0,5 bis 5 pphp und besonders bevorzugt von 1 bis 3 pphp.

Als Polyolkomponente a) geeignete Polyole im Sinne der vorliegenden Erfindung sind alle organischen Substanzen mit einer oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxyl¬gruppen¬haltigen aliphatischen Polycarbonate, insbesondere Polyetherpoly¬carbonat¬polyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Polyetherpolyole können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppel¬metall¬cyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung

Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

In einer besonders bevorzugten Ausführungsform werden Polyesterpolyole auf Basis von aromatischen Carbonsäuren in mehr als 50 pphp, bevorzugt mehr als 70 pphp eingesetzt, bezogen auf 100 Massenteile Polyolkomponente.

In einer weiteren ganz besonders bevorzugten Ausführungsform werden keine Polyole auf Basis von Phenol-Harzen, hergestellt aus Novolaken und Alkylenoxiden, und keine Polyole auf Basis von aromatischen Amin-Polyolen, hergestellt durch Alkoxylierung von aromatischen Aminen, eingesetzt, was bedeutet, dass in dieser bevorzugten Ausführungsform weniger als 20 pphp, vorzugsweise weniger als 10 pphp, insbesondere weniger als 2 pphp, und am vorteilhaftesten überhaupt keine Polyole auf Basis von Phenol-Harzen, hergestellt aus Novolaken und Alkylenoxiden, und überhaupt keine Polyole auf Basis von aromatischen Amin-Polyolen, hergestellt durch Alkoxylierung von aromatischen Aminen, eingesetzt werden.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO2 als Comonomer ökologisch sehr vorteilhaft, da diese Reaktion die Umsetzung eines Treibhausgases zu einem Polymer darstellt. Die Herstellung von Polyether¬poly¬carbonat¬polyolen durch Anlagerung von Alkylenoxiden und Kohlendioxid an H-funktionelle Start¬substanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 600. Ein Index von 100 steht für ein molares Verhältnis der reaktiven Gruppen von 1 zu 1.

In einer bevorzugten Ausführungsform der Erfindung ist der Index der Formulierung im Bereich 150 bis 550, besonders bevorzugt 200 bis 500. Das heisst, In einer bevorzugten Ausführungsform ist ein deutlicher Überschuss an Isocyanat- Gruppen zu isocyanat-reaktiven Gruppen vorhanden. Dadurch kommt es zur Trimerisierungsreaktionen der Isocyanate, die somit Isocyanurate bilden. Diese Schaum Typen werden auch als Polyisocyanurat (PIR)-Schäume bezeichnet und zeichnen sich durch ein verbessertes Brandverhalten, also schlechteres Brennen, aus. Diese Schaum Typen sind ein bevorzugter Gegenstand der Erfindung.

Als Isocyanatkomponenten b) werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanat¬ver¬brauchen¬den Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylen-diisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,3,5-trimethyl-5-isocyanato¬methyl¬cyclohexan (Isophorondiisocyanat oder kurz IPDI), 2,4- und 2,6-Hexa¬hydro¬toluylen¬diisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf basis Isocyanurat, Biurete- Urethdione.) Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat , Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Geeignete Katalysatoren c) im Sinne der vor¬liegen¬den Erfindung sind alle Verbindungen, die in der Lage sind die Reaktion von Isocyanaten mit OH- Funktionen, NH-Funktionen oder anderen isocyanat-reaktiven Gruppen sowie mit Isocyanaten selbst zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), Ammonium-Verbindungen, metallorganische Verbindungen und Metallsalze, vorzugsweise die des Zinn, Eisen, Wismut und Zink. Insbesondere können als Katalysatoren Gemische mehrerer Komponenten eingesetzt werden.

Als Komponente d) werden die erfindungsgemäßen Mischungen (also Kohlenwasserstoffe KWS, Polyether-modifizierten Siloxane und optionalen Polyalkyl-Siloxane) eingesetzt.
Die Verwendung von Polyether-modifizierten Siloxane (PES) in Hartschäumen ist bekannt. Hierbei können im Rahmen dieser Erfindung alle solchen eingesetzt werden, die die Schaumherstellung unterstützen (Stabilisierung, Zellregulierung, Zellöffnung, etc.). Diese Verbindungen sind aus dem Stand der Technik hinreichend bekannt.
Entsprechende, im Sinne dieser Erfindung einsetzbare PES werden z.B. in den folgenden Patentschriften beschrieben: CN 103665385, CN 103657518, CN 103055759, CN 103044687, US 2008/ 0125503, US 2015/0057384, EP 1520870 A1, EP 1211279, EP 0867464, EP 0867465, EP 0275563. Diese vorgenannten Schriften werden hiermit als Referenz eingeführt und gelten als Teil des Offenbarungsgehaltes der vorliegenden Erfindung.
Die optionalen, erfingungsgemäß bevorzugt eingesetzten Polyalkylsiloxane (PAS) und Polyether-modifizierten Siloxane (PES) sind bereits oben beschrieben, ebenso die Kohlenwasserstoffe KWS.

Gemäß einer weiteren bevorzugten Ausführungsform ist die Gesamtmenge der eingesetzten Mischung (also die Gesamtheit aus Kohlenwasserstoffe KWS, Polyether-modifizierten Siloxane und optionalen Polyalkyl-Siloxane) so bemessen, dass der Massenanteil bezogen auf das fertige Polyurethan 0,01 bis 10 Gew.-%, bevorzugt 0,1 bis 3 Gew.-% beträgt.

Die Verwendung von Treibmitteln e) ist optional, je nachdem welches Verschäumungsverfahren verwendet wird. Es kann mit chemischen und physikalischen Treibmitteln gearbeitet werden.

Je nach Menge des verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure. Beispiele für Treibmittel sind verflüssigtes CO2, Stickstoff, Luft, leichtflüchtige Flüssigkeiten, beispielsweise Kohlen¬wasser¬stoffe mit 3, 4 oder 5 Kohlenstoff-Atomen, bevorzugt cyclo-, iso- und n-Pentan, Fluor¬kohlen¬wasserstoffe, bevorzugt HFC 245fa, HFC 134a und HFC 365mfc, Fluor¬chlor¬kohlen¬wasserstoffe, bevorzugt HCFC 141b, Hydrofluoroolefine (HFO) oder Hydrohaloolefine wie z.B. 1234ze, 1234yf, 1233zd(E) oder 1336mzz, Sauerstoff-haltige Verbindungen wie Methyl¬formiat, Aceton und Dimethoxymethan, oder Chlorkohlenwasserstoffe, bevorzugt Dichlor¬methan und 1,2-Dichlorethan.

Geeignete Wasser-Gehalte im Sinne dieser Erfindung hängen davon ab, ob zusätzlich zum Wasser noch ein oder mehrere Treibmittel eingesetzt werden oder nicht. Bei rein Wasser getriebenen Schäumen liegen bevorzugte Werte typischerweise bei 1 bis 20 pphp, werden zusätzlich andere Treibmittel eingesetzt, verringert sich die bevorzugte Einsatzmenge auf üblicherweise 0,1 bis 5 pphp.

Als Zusatzstoffe f) können alle nach dem Stand der Technik bekannten Substanzen verwendet werden, die bei der Herstellung von Polyurethanen, insbesondere von Polyurethan¬schaum¬stoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Das erfindungsgemäße Verfahren zur Herstellung von PU-Schäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 5 bis 900 kg/m3 und hat die in Tabelle 1 genannte Zusammensetzung.

**Tabelle 1: Zusammensetzung einer bevorzugten Polyurethan- bzw. Polyisocyanurat-Hartschaumformulierung**

| Komponente | Gewichtsanteil |
|---|---|
| Polyol | 0,1 bis 100 |
| Amin-Katalysator | 0 bis 5 |
| Metall-Katalysator | 0 bis 10 |
| Kohlenwasserstoffe KWS, Polyether-modifizierten Siloxane und optionale Polyalkyl-Siloxane | 0,1 bis 8 |
| Wasser | 0,01 bis 20 |
| Treibmittel | 0 bis 40 |
| Weitere Additive (Flammschutzmittel etc.) | 0 bis 90 |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen. Vorzugsweise gelten diese Ausführungen.

Ein weiterer Gegenstand der Erfindung ist ein PU-Hartschaum, erhältlich durch das genannte Verfahren.

Gemäß einer bevorzugten Ausführungsform der Erfindung weist der Polyurethanschaum ein Raumgewicht von 5 bis 900 kg/m³, bevorzugt 8 bis 800, besonders bevorzugt 10 bis 600 kg/m³, insbesondere 30 bis 150 kg/m³ auf.

Polyurethan-Hartschaum bzw. PU-Hartschaum ist ein feststehender technischer Begriff. Der bekannte und prinzipielle Unterschied zwischen Weichschaum und Hartschaum ist, dass ein Weichschaum ein elastisches Verhalten zeigt und damit die Verformung reversibel ist. Der Hartschaum wird demgegenüber dauerhaft verformt. Im Rahmen der vorliegenden Erfindung wird unter Polyurethan-Hartschaumstoff insbesondere ein Schaumstoff gemäß DIN 7726 verstanden, der eine Druckfestigkeit nach DIN 53 421 / DIN EN ISO 604 von vorteilhafterweise ≥ 20 kPa, vorzugsweise ≥ 80 kPa, bevorzugt ≥ 100 kPa, weiter bevorzugt ≥ 150 kPa, besonders bevorzugt ≥ 180 kPa aufweist. Weiterhin verfügt der Polyurethan-Hartschaumstoff nach DIN ISO 4590 vorteilhafterweise über eine Geschlossenzelligkeit von größer 50%, vorzugsweise größer 80% und besonders bevorzugt größer 90%.

Die erfindungsgemäßen PU-Hartschäume können als oder zur Herstellung von Isoliermaterialien, vorzugsweise Dämmplatten, Kühlschränken, Isolierschäumen, Dachhimmeln, Verpackungsschäumen oder Sprühschäumen verwendet werden.

Insbesondere in der Kühlhaus-, Kühlgeräte- und Hausgeräteindustrie; z. B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schäume mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Erfindungsgemäße Kühlapparaturen weisen als Isoliermaterial einen erfindungsgemäßen PU-Schaum (Polyurethan- oder Polyisocyanuratschaumstoff) auf.

Ein weiterer Gegenstand der Erfindung liegt in der Verwendung des PU-Hartschaums als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### BEISPIELE

Als Polyether-modifizierte Siloxane (PES) wurden die folgenden Materialien eingesetzt.
PES Nr. 1, wie in WO2011/012390 A1, Beispiel 4 beschrieben.
PES Nr. 2, wie in WO2011/012390 A1, Beispiel 5 beschrieben.
PES Nr. 3 wie in EP 1544235 A1 in Beispiel 14 beschrieben.

Als erfindungsgemäße Kohlenwasserstoffe (KWS) wurden die Folgenden Materialien eingesetzt.

### Tabelle: 2

**Tabelle: Beschreibung der Kohlenwasserstoffe (KWS)**

| | Bezeichnung | Material (Hersteller) |
|---|---|---|
| KWS Nr. 1 | Decen | Alpha Plus 1-Decene (Chevron) |
| KWS Nr. 2 | Dodecen | Alpha Plus 1-Dodecene (Chevron) |
| KWS Nr. 3 | Dodekan | C 1012 Paraffin (Sasol) |
| KWS Nr. 4 | Tetradecan | PARAFOL^{®} 14-97 (Sasol) |
| KWS Nr. 5 | Tributen | (Evonik) |
| KWS Nr. 6 | Tetrabuten | (Evonik) |
| KWS Nr. 7 | Tetrabutan | (Evonik) |
| KWS Nr. 8 | Oxoöl LS 13 | (Evonik) |
| KWS Nr. 9 | Alkylbenzol | "Hyblene 113 (Sasol)" |

Als Polyalkyl Siloxane (PAS) wurden die folgenden Materialien eingesetzt entsprechend der Formel (1), Mₐ D_{b} T_{c} Q_{d}, wie oben definiert. Diese sind in Tabelle 3 zusammengefasst.

**Tabelle 3: Beschreibung der Polyalkyl Siloxane**

| Beispiel | a | b | c | d | R¹¹ | R¹² | R¹³ | R¹⁴ | R¹⁵ | R¹⁶ |
|---|---|---|---|---|---|---|---|---|---|---|
| PAS Nr. 1 | 3 | 0 | 1 | 0 | Me | Me | Me | - | - | Me |
| PAS Nr. 2 | 3 | 0 | 1 | 0 | Me | Me | Me | - | - | Vinyl |
| PAS Nr. 3 | 4 | 0 | 0 | 1 | Me | Me | Me | - | - | - |
| PAS Nr. 4 | 4 | 0 | 2 | 0 | Me | Me | Me | - | - | Me |
| PAS Nr. 5 | 2 | 1 | 0 | 0 | Me | Me | Me | Octyl | Me | - |
| PAS Nr. 6 | 2 | 1 | 0 | 0 | Me | Me | Me | Ethyl | Me | - |
| PAS Nr. 7 | 4 | 1 | 2 | 0 | Me | Me | Me | Me | Me | |
| PAS Nr. 8 | 2 | 2-4 | 0 | 0 | Me | Me | Me | Me, Cl-Propyl | Me | - |
| PAS Nr. 9 | 2 | 3-5 | 0 | 0 | Me | Me | Me | Me | Me | - |
| PAS Nr. 10 | 2 | 3-7 | 0 | 0 | Me | Me | Me | Me | Me | - |
| PAS Nr. 11 | 0 | 5 | 0 | 0 | - | - | | Me | Me | - |

Zur erfindungsgemäßen Herstellung von PU-Hartschäumen wurden die Polyether-modifizierten Siloxane mit den verschiedenen Kohlenwasserstoffen und Polyalkyl-Siloxane in Mischung bzw. Kombination eingesetzt.
Hierbei wurden folgende Mischungen verwendet, die in Tabelle 4 zusammengefasst sind.

Es wurden die folgenden Mischungen aus Polyether Siloxanen (PES) und Kohlenwasserstoffen (KWS) hergestellt

**Tabelle 4: Beschreibung der PES/KW Mischungen (Übersicht über PES/KWS-Kombinationen**

| | PES | Gew.-Anteil | KWS | Gew.-Anteil |
|---|---|---|---|---|
| Mischung 1 | Nr. 1 | 98 | Nr. 1 | 2 |
| Mischung 2 | Nr. 1 | 98 | Nr. 2 | 2 |
| Mischung 3 | Nr. 2 | 98 | Nr. 1 | 2 |
| Mischung 4 | Nr. 2 | 98 | Nr. 2 | 2 |
| Mischung 5 | Nr. 2 | 98 | Nr. 3 | 2 |
| Mischung 6 | Nr. 2 | 96 | Nr. 3 | 4 |
| Mischung 7 | Nr. 3 | 98 | Nr. 3 | 2 |
| Mischung 8 | Nr. 3 | 98 | Nr. 8 | 2 |
| Mischung 9 | Nr. 3 | 98 | Nr. 4 | 2 |
| Mischung 10 | Nr. 3 | 98 | Nr. 6 | 2 |
| Mischung 11 | Nr. 3 | 98 | Nr. 7 | 2 |
| Mischung 12 | Nr. 3 | 98 | Nr. 9 | 2 |
| Mischung 13 | Nr. 3 | 96 | Nr. 8 | 4 |
| Mischung 14 | Nr. 3 | 96 | Nr. 6 | 4 |
| Mischung 15 | Nr. 3 | 96 | Nr. 3 | 4 |
| Mischung 16 | Nr. 3 | 98 | Nr. 5 | 2 |
| Mischung 17 | Nr. 3 | 96 | Nr. 5 | 4 |
| Mischung 18 | Nr. 3 | 90 | Nr. 5 | 10 |
| Mischung 19 | Nr. 3 | 90 | Nr. 8 | 10 |

Des weiteren wurden sowohl PES als auch KWS mit PES kombiniert.

**Tabelle 5: Beschreibung der PES/KWS/PAS/ Mischungen**

| | PES | Gew.-Anteil | KWS | Anteil | PAS | Gew.-Anteil |
|---|---|---|---|---|---|---|
| Mischung 20 | Nr. 2 | 96 | Nr. 3 | 2 | Nr. 10 | 2 |
| Mischung 21 | Nr. 2 | 92 | Nr. 3 | 4 | Nr. 7 | 4 |
| Mischung 22 | Nr. 2 | 96 | Nr. 3 | 2 | Nr. 7 | 2 |
| Mischung 23 | Nr. 3 | 96 | Nr. 8 | 2 | Nr. 10 | 2 |
| Mischung 24 | Nr. 3 | 96 | Nr. 5 | 2 | Nr. 1 | 2 |
| Mischung 25 | Nr. 3 | 96 | Nr. 6 | 2 | Nr. 2 | 2 |
| Mischung 26 | Nr. 3 | 94 | Nr. 8 | 4 | Mr. 3 | 2 |
| Mischung 27 | Nr. 3 | 94 | Nr. 8 | 4 | Nr. 4 | 2 |
| Mischung 28 | Nr. 3 | 96 | Nr. 5 | 2 | Nr. 5 | 2 |
| Mischung 29 | Nr. 3 | 96 | Nr. 8 | 2 | Nr. 8 | 2 |
| Mischung 30 | Nr. 3 | 96 | Nr. 5 | 2 | Nr. 9 | 2 |

Entsprechend der Zusammensetzung werden die erfindungsgemäßen Mischungen mit den entsprechenden nicht-erfindungsgemäßen Polyether Siloxanen verglichen in den folgenden Verschäumungsversuchen.
Mit PES Nr. 1 werden verglichen:
Mischungen 1 bis 2:
Mit PES Nr. 2 werden verglichen:
Mischungen 3 bis 6, sowie 20 bis 22
Mit PES Nr. 3 werden verglichen:
Mischungen 7 bis 19 , sowie 23 bis 29

Zur Herstellung von Schäumen wurden folgende Rohstoffe eingesetzt.
Stepanpol PS 2352: Polyesterpolyol der Firma Stepan
Stepanpol PS 2412: Polyesterpolyol der Firma Stepan
Terate HT 5511: Polyesterpolyol der Firma Invista
TCPP: Tris(2-chlorisopropyl)phosphat der Firma Fyrol
Kosmos 75 von Fa. Evonik Nutrition & Care GmbH, Katalysator auf Basis Kaliumoctoat
Polycat 5 von Fa. Evonik Nutrition & Care GmbH, Amin-Katalysator
MDI (44V20): Desmodur 44V20L der Fa. Covestro, Diphenylmethan-4,4'-diisocyanat (MDI) mit Isomeren und höherfunktionellen Homologen

### Beispiele: Herstellung von PU Schäumen

Die Durchführung der Verschäumungen erfolgte im Handmischverfahren. Dazu wurden die erfindungsgemäßen Verbindungen, Polyole, Flammschutzmittel, Katalysatoren, Wasser, erfindungsgemäße oder nicht erfindungsgemäße Siloxan-Surfactants, erfindungsgemäße Kohlenwasserstoffe sowie optional Polyalkyl-Siloxane und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt..

Im Falle der hier verwendeten PIR-Formulierungen für Panel-Anwendungen wie zum Beispiel Gebäude-Isolation wurde das Gemisch sofort in eine auf 65°C thermostatisierte Aluminiumform mit den Abmessungen 50 cm x 25 cm x 7 cm eingetragen. Die Einsatzmenge an Schaumformulierung war dabei so bemessen, dass Menge zur Mindestbefüllung der Form ausreichte. Die Schäume würde nach 10 Minuten entformt und anschließend für 24 Stunden bei Raumtemperatur gelagert.

Anhand einer Schnittfläche im Schaum wurde der Grad der Innenstörungen und die Porenstruktur visuell beurteilt anhand einer Skala von 1 bis 10, wobei 10 einen ungestörten Schaum und 1 einen extrem stark gestörten Schaum repräsentiert.

Die Wärmeleitzahl (λ-Wert in mW/m·K) wurde an 2,5 cm dicken Scheiben mit einem Gerät vom Typ Hesto Lambda Control, Modell HLC X206 gemessen bei einer mittleren Temperatur von 10°C entsprehend den Vorgaben der Norm EN12667:2001.

In den Tabelle 6 sind die verwendeten Schaumformulierungen zusammengefasst.

**Tabelle 6 (Angaben in Gewichtsteilen)**

| Formulierung Beispiel | PIR-1 | PIR-2 | PIR 3 |
|---|---|---|---|
| PS 2412 | 100 | | |
| PS 2352 | | 100 | |
| HT 5511 | | | 100 |
| DABCO TMR 12 | 2,5 | 2,5 | 2,5 |
| Polycat 5 | 0,5 | 0,5 | 0,5 |
| erfindungsgemäße Mischung | 2,5 | 2,5 | 2,5 |
| TCPP | 8 | 15 | 13 |
| Wasser | 0,5 | 0,5 | 0,5 |
| Iso-Pentan | 10,5 | 10,5 | 10,5 |
| Cyclo-pentan | 4,5 | 4,5 | 4,5 |
| MDI (44V20) | 200 | 200 | 200 |

Verschäumungsergebnisse mit den Siloxan-Mischungen

**Tabelle 7**

| Zusammenfassung der Verschäumungsversuche mit verschiedenen Siloxan-Mischungen und Schaumformulierungen. | | | | |
|---|---|---|---|---|
| Schaum Beispiel | erfindungsgemäße Mischung | Formulierung-Nr. | Lambda | Innen störungen |
| Vgl. 1 | PES Nr. 1 (nicht erfinderisch) | 1 | 22,1 | 8 |
| 1 | Mischung 1 | 1 | 21,8 | 8,5 |
| 2 | Mischung 2 | 1 | 21,7 | 9 |
| Vgl. 2 | PES Nr. 1 (nicht erfinderisch) | 2 | 22,1 | 7,5 |
| 3 | Mischung 1 | 2 | 21,9 | 8,5 |
| 4 | Mischung 2 | 2 | 21,6 | 8,5 |
| Vgl. 3 | PES Nr. 1 (nicht erfinderisch) | 3 | 22,4 | 8,5 |
| 5 | Mischung 1 | 3 | 21,8 | 9 |
| 6 | Mischung 2 | 3 | 21,5 | 9 |
| Vgl. 4 | PES Nr. 2 (nicht erfinderisch) | 3 | 23,4 | 7,5 |
| 7 | Mischung 3 | 3 | 22,2 | 8,5 |
| 8 | Mischung 4 | 3 | 22,0 | 8,5 |
| Vgl. 5 | PES Nr. 2 (nicht erfinderisch) | 2 | 22,8 | 7,5 |
| 9 | Mischung 3 | 2 | 21,6 | 9 |
| 10 | Mischung 4 | 2 | 21,5 | 8,5 |
| 11 | Mischung 5 | 2 | 21,4 | 9 |
| 12 | Mischung 6 | 2 | 21,2 | 8 |
| Vgl. 6 | PES Nr. 3 (nicht erfinderisch) | 2 | 22,1 | 9 |
| 13 | Mischung 7 | 2 | 21,6 | 8,5 |
| 14 | Mischung 8 | 2 | 21,7 | 9 |
| Vgl. 7 | PES Nr. 3 (nicht erfinderisch) | 2 | 23,0 | 8,5 |
| 15 | Mischung 9 | 2 | 22,4 | 9 |
| 16 | Mischung 10 | 2 | 22,5 | 8 |
| 17 | Mischung 11 | 2 | 22,6 | 9 |
| 18 | Mischung 12 | 2 | 22,6 | 8 |
| 19 | Mischung 13 | 2 | 21,3 | 8,5 |
| 20 | Mischung 14 | 2 | 21,4 | 9 |
| 21 | Mischung 15 | 2 | 21,4 | 8 |
| 22 | Mischung 16 | 2 | 21,4 | 9 |
| 23 | Mischung 17 | 2 | 21,4 | 9 |
| 24 | Mischung 18 | 2 | 21,2 | 8,5 |
| 25 | Mischung 19 | 2 | 21,3 | 9 |

Ebenso wurden Verschäumungen durchgeführt mit KWS und PAS als Zusatz zu PolyetherSiloxanen. Die Ergebnisse sind in Tabelle 8 zusammengefasst.

**Tabelle 8: Zusammenfassung der Verschäumungsversuche mit Siloxan-Mischungen, die KWS und PAS enthalten in verschiedenen Schaumformulierungen.**

| Schaum Beispiel | erfindungsgemäße Mischung | Formulierung-Nr. | Lambda | Innen störungen |
|---|---|---|---|---|
| Vgl. 8 | PES Nr. 2 (nicht erfinderisch) | 2 | 22,0 | 8 |
| 26 | Mischung 20 | 2 | 21,2 | 8 |
| 27 | Mischung 21 | 2 | 21,0 | 8 |
| 28 | Mischung 22 | 2 | 20,6 | 8,5 |
| Vgl. 9 | PES Nr. 3 (nicht erfinderisch) | 2 | 23,1 | 8,5 |
| 29 | Mischung 23 | 2 | 21,5 | 8 |
| 30 | Mischung 24 | 2 | 21,4 | 8,5 |
| 31 | Mischung 25 | 2 | 21,6 | 8 |
| 32 | Mischung 26 | 2 | 21,4 | 8 |
| 33 | Mischung 27 | 2 | 21,3 | 8,5 |
| 34 | Mischung 28 | 2 | 21,5 | 8,5 |
| 35 | Mischung 29 | 2 | 21,4 | 8 |
| 36 | Mischung 30 | 2 | 21,4 | 8,5 |

Aus den Versuchen ist klar ersichtlich, das die erfindungsgemäßen Mischungen zu verbesserten Isolationseigenschaften führen.

Hierbei ist besonders hervorzuheben, dass bereits eine sehr geringe Zugabe an erfindungsgemäßen KWS und PAS zu messbaren Verbesserungen führt.

## Patentansprüche

1. Zusammensetzung zur Herstellung von Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel, wobei die Zusammensetzung zusätzlich Kohlenwasserstoffe KWS, welche bei Normaldruck Siedepunkte > 100°C, vorzugsweise > 150°C aufweisen, und Polyether-modifiziertes Siloxan umfasst,
wobei es sich bei den Kohlenwasserstoffen KWS um Decen, Dodecen, Dodekan, Tetradecan, Tributen, Tributan, Tetrabuten, Tetrabutan, Alkylbenzole mit mindestens 10 Kohlenstoffatomen und/oder Oxoöle handelt,
und wobei 3. die Kohlenwasserstoffe KWS in Kombination mit Polyether-modifizierten Siloxanen im Massenverhältnis von 1:5 zu 1:200 eingesetzt werden.

2. Zusammensetzung gemäß Anspruch 1 **dadurch gekennzeichnet, dass** sie zusätzlich Polyalkyl-Siloxane umfasst, wobei die Polyalkyl-Siloxane vorzugsweise weniger als 20, bevorzugt weniger als 15 besonders bevorzugt weniger als 11 Si-Atome enthalten, und wobei die Polyalkyl-Siloxane in Bezug auf das Polyether-modifizierte Siloxan vorzugsweise im Massenverhältnis von 1:5 zu 1:200 eingesetzt werden.

3. Zusammensetzung gemäß einem der Ansprüche 1 oder 2, **dadurch gekennzeichnet, dass** der Massenanteil der Gesamtmenge aus Kohlenwasserstoffe KWS, Polyether-modifizierten-Siloxanen und optionalem Polyalkyl-Siloxanen bezogen auf 100 Massenteile Polyolkomponente von 0,1 bis 10 pphp, bevorzugt von 0,5 bis 5 pphp und besonders bevorzugt von 1 bis 3 pphp beträgt.

4. Zusammensetzung gemäß einem der Ansprüche 2 bis 3, **dadurch gekennzeichnet, dass** die Polyalkyl-Siloxane der Formel 1 genügen:
MₐD_{b}T_{c}Q_{d} (Formel 1)
mit
M = R¹¹R¹²R¹³SiO_{1/2}
D = R¹⁴R¹⁵SiO_{2/2}
T = R¹⁶SiO_{3/2}
Q = SiO_{4/2}
wobei
R¹¹, R¹², R¹³, R¹⁴, R¹⁵, R¹⁶ = gleiche oder verschiedene Kohlenwasserstoffreste mit 1 bis 12, vorzugsweise 1 bis 8, Kohlenstoffatomen, wobei die Kohlenwasserstoffreste ggf. mit Heteroatomen substituiert sind, oder aber H,
insbesondere bevorzugt sind die Reste: Phenyl-, CH₃-, CH₃CH₂-, CH₂CH- ClCH₂CH₂CH₂-sowie H-,
und wobei
a = 2 bis 6
b = 0 bis 8
c = 0 bis 4
d = 0 bis 2
mit der Maßgabe, das a + b + c + d < 20, bevorzugt < 15 insbesondere bevorzugt < 11 ist,

5. Zusammensetzung gemäß Anspruch 4, **dadurch gekennzeichnet, dass** c + d > 0,5, insbesondere c + d ≥ 1.

6. Zusammensetzung gemäß einem der Ansprüche 4 bis 5, **dadurch gekennzeichnet, dass**
d = 0 und c > 0,5, insbesondere d = 0 und c ≥1 ist.

7. Zusammensetzung gemäß Anspruch 4, **dadurch gekennzeichnet, dass** c + d < 0,5, insbesondere c + d <0,1 ist.

8. Zusammensetzung gemäß einem der Ansprüche 3 bis 6, **dadurch gekennzeichnet, dass**
R¹⁶ unterschiedlich zu R¹¹, R¹², R¹³, R¹⁴ und R¹⁵ ist,
und/oder
dass R¹¹, R¹² und R¹³ unterschiedlich sind.

9. Verfahren zur Herstellung von Polyurethanhartschaum, durch Umsetzung einer oder mehrerer Polyolkomponenten mit einer oder mehrerer Isocyanatkomponenten, **dadurch gekennzeichnet, dass** die Umsetzung in Gegenwart von Kohlenwasserstoffen KWS, Polyether-modifizierten Siloxanen und ggf. Polyalkyl-Siloxanen erfolgt, unter Einsatz einer Zusammensetzung gemäß einem der Ansprüche 1 bis 8.

10. Verfahren gemäß Anspruch 9, **dadurch gekennzeichnet, dass** die Komponenten Kohlenwasserstoffe KWS, Polyether-modifiziertes Siloxan sowie optionales Polyalkyl-Siloxanen getrennt oder gemeinsam dem Reaktionsgemisch zur Herstellung des PU-Hartschaums zugeführt werden.

11. Verwendung einer Kombination aus Kohlenwasserstoffe KWS, Polyether-modifiziertem Siloxan sowie optionalem Polyalkyl-Siloxan zur Herstellung von Polyurethanhartschaumstoffen, vorzugsweise als Schaumstabilisator, bevorzugt zur Verbesserung der Isoliereigenschaften des Schaumstoffs, unter Einsatz einer Zusammensetzung gemäß einem der Ansprüche 1 bis 8.

12. Polyurethanhartschaumstoff, erhältlich durch das Verfahren nach Anspruch 9 oder 10.

13. Verwendung des Polyurethanhartschaumstoffs gemäß Anspruch 12 als Dämmplatten und/oder Isolationsmittel, vorzugsweise für Kühlapparaturen.

## Claims

1. Composition for production of rigid polyurethane foam, comprising at least one isocyanate component, a polyol component, optionally a catalyst that catalyses the formation of a urethane or isocyanurate bond, optionally blowing agents, where the composition additionally comprises hydrocarbons HC that have boiling points at standard pressure of > 100°C, preferably > 150°C, and polyether-modified siloxane,
where the hydrocarbons HC are decene, dodecene, dodecane, tetradecane, tributene, tributane, tetrabutene, tetrabutane, alkylbenzenes having at least 10 carbon atoms and/or oxo process oils, and where the hydrocarbons HC are used in combination with polyether-modified siloxanes in a mass ratio of 1:5 to 1:200.

2. Composition according to Claim 1, **characterized in that** it additionally comprises polyalkylsiloxanes, where the polyalkylsiloxanes contain preferably less than 20, more preferably less than 15 and especially preferably less than 11 silicon atoms, and where the polyalkylsiloxanes in relation to the polyether-modified siloxane are preferably used in a mass ratio of 1:5 to 1:200.

3. Composition according to either of Claims 1 and 2, **characterized in that** the proportion by mass of the total amount of hydrocarbons HC, polyether-modified siloxanes and optional polyalkylsiloxanes, based on 100 parts by mass of polyol component, is from 0.1 to 10 pphp, preferably from 0.5 to 5 pphp and more preferably from 1 to 3 pphp.

4. Composition according to either of Claims 2 and 3, **characterized in that** the polyalkylsiloxanes conform to the formula 1:
MₐD_{b}T_{c}Q_{d} (Formula 1)
where
M = R¹¹R¹²R¹³SiO_{1/2}
D = R¹⁴R¹⁵SiO_{2/2}
T = R¹⁶SiO_{3/2}
Q = SiO_{4/2}
where
R¹¹, R¹², R¹³, R¹⁴, R¹⁵, R¹⁶ = identical or different hydrocarbon radicals having 1 to 12, preferably 1 to 8, carbon atoms, where the hydrocarbon radicals are optionally substituted by heteroatoms, or else H,
especially preferred are the radicals: phenyl-, CH₃-, CH₃CH₂-, CH₂CH- ClCH₂CH₂CH₂- and H-,
and where
a = 2 to 6
b = 0 to 8,
c = 0 to 4,
d = 0 to 2,
with the proviso that a + b + c + d < 20, preferably < 15, especially preferably < 11.

5. Composition according to Claim 4, **characterized in that**
c + d > 0.5, especially c + d ≥ 1.

6. Composition according to either of Claims 4 and 5, **characterized in that**
d = 0 and c > 0.5, especially d = 0 and c ≥1.

7. Composition according to Claim 4, **characterized in that**
c + d < 0.5, especially c + d <0.1.

8. Composition according to any of Claims 3 to 6, **characterized in that**
R¹⁶ is different from R¹¹, R¹², R¹³, R¹⁴ and R¹⁵,
and/or
**in that** R¹¹, R¹² and R¹³ are different.

9. Process for producing rigid polyurethane foam by reacting one or more polyol components with one or more isocyanate components, **characterized in that** the reaction is effected in the presence of hydrocarbons HC, polyether-modified siloxanes and optionally polyalkylsiloxanes, using a composition according to any of Claims 1 to 8.

10. Process according to Claim 9, **characterized in that** the components hydrocarbons HC, polyether-modified siloxane and optional polyalkylsiloxanes are supplied separately or together to the reaction mixture for production of the rigid PU foam.

11. Use of a combination of hydrocarbons HC, polyether-modified siloxane and optional polyalkylsiloxane for production of rigid polyurethane foams, preferably as foam stabilizer, more preferably for improvement of the insulation properties of the foam, using a composition according to any of Claims 1 to 8.

12. Rigid polyurethane foam obtainable by the process according to Claim 9 or 10.

13. Use of the rigid polyurethane foam according to Claim 12 as insulation boards and/or insulant, preferably for cooling apparatuses.

## Revendications

1. Composition pour la préparation de mousse dure de polyuréthane, comprenant au moins un composant isocyanate, un composant polyol, éventuellement un catalyseur, qui catalyse la formation d'une liaison uréthane ou isocyanurate, éventuellement des agents gonflants, la composition comprenant en outre des hydrocarbures HC, qui présentent à pression normale des points d'ébullition > 100°C, de préférence > 150°C, et un siloxane modifié par polyéther
les hydrocarbures HC étant le décène, le dodécène, le dodécane, le tétradécane, le tributène, le tributane, le tétrabutène, le tétrabutane, des alkylbenzènes comprenant au moins 10 atomes de carbone et/ou d'huiles oxo, et les hydrocarbures HC sont utilisés en combinaison avec des siloxanes modifiés par polyéther dans un rapport massique de 1:5 à 1:200.

2. Composition selon la revendication 1, **caractérisée en ce qu'**elle comprend en plus des polyalkylsiloxanes, les polyalkylsiloxanes contenant de préférence moins de 20, de préférence moins de 15, de manière particulièrement préférée moins de 11 atomes de Si et les polyalkylsiloxanes étant utilisés, par rapport au siloxane modifié par polyéther, de préférence dans un rapport massique de 1:5 à 1:200.

3. Composition selon l'une des revendications 1 ou 2, **caractérisée en ce que** la proportion massique de la quantité totale d'hydrocarbures HC, de siloxanes modifiés par polyéther et le cas échéant de polyalkylsiloxanes, par rapport à 100 parties en masse de composant polyol, est de 0,1 à 10 pphp, de préférence de 0,5 à 5 pphp et de manière particulièrement préférée de 1 à 3 pphp.

4. Composition selon l'une quelconque des revendications 2 à 3, **caractérisée en ce que** les polyalkylsiloxanes satisfont à la formule 1 :
MₐD_{b}T_{c}Q_{d} (Formule 1)
dans laquelle
M = R¹¹R¹²R¹³SiO_{1/2}
D = R¹⁴R¹⁵SiO_{2/2}
T = R¹⁶SiO_{3/2}
Q = SiO_{4/2}
dans lesquelles
R¹¹, R¹², R¹³, R¹⁴, R¹⁵, R¹⁶ = des radicaux hydrocarbonés identiques ou différents comprenant 1 à 12, de préférence 1 à 8 atomes de carbone, les radicaux hydrocarbonés étant le cas échéant substitués par des hétéroatomes, ou alors H,
les radicaux : phényl-, CH₃-, CH₃CH₂-, CH₂CH-, ClCH₂CH₂CH₂- ainsi que H- étant particulièrement préférés,
et
a = 2 à 6
b = 0 à 8
c = 0 à 4
d = 0 à 2
sous réserve que a + b + c + d < 20, de préférence < 15 de manière particulièrement préférée < 11.

5. Composition selon la revendication 4, **caractérisée en ce que** c + d > 0,5, en particulier c + d ≥ 1.

6. Composition selon l'une quelconque des revendications 4 à 5, **caractérisée en ce que** d = 0 et c > 0,5, en particulier d = 0 et c ≥ 1.

7. Composition selon la revendication 4, **caractérisée en ce que** c + d < 0,5, en particulier c + d < 0,1.

8. Composition selon l'une quelconque des revendications 3 à 6, **caractérisée en ce que** R¹⁶ est différent de R¹¹, R¹², R¹³, R¹⁴ et R¹⁵, et/ou **en ce que** R¹¹, R¹² et R¹³ sont différents.

9. Procédé pour la préparation de mousse dure de polyuréthane par transformation d'un ou de plusieurs composants polyol avec un ou plusieurs composants isocyanate, **caractérisé en ce que** la transformation a lieu en présence d'hydrocarbures HC, de siloxanes modifiés par polyéther et le cas échéant de polyalkylsiloxanes, avec utilisation d'une composition selon l'une quelconque des revendications 1 à 8.

10. Procédé selon la revendication 9, **caractérisé en ce que** les composants hydrocarbures HC, siloxanes modifiés par polyéther ainsi que le cas échéant polyalkylsiloxanes sont introduits séparément ou simultanément dans le mélange réactionnel pour la préparation de la mousse dure de PU.

11. Utilisation d'une combinaison d'hydrocarbures HC, de siloxane modifié par polyéther et le cas échéant de polyalkylsiloxane pour la préparation de mousses dures de polyuréthane, de préférence comme stabilisant de mousse, de préférence pour améliorer les propriétés d'isolation de la mousse, avec utilisation d'une composition selon l'une quelconque des revendications 1 à 8.

12. Mousse dure de polyuréthane pouvant être obtenue par le procédé selon la revendication 9 ou 10,

13. Utilisation de la mousse dure de polyuréthane selon la revendication 12 comme panneaux isolants et/ou moyens d'isolation, de préférence pour des appareils de refroidissement.
